# EUROPEAN PATENT APPLICATION

(11) **EP 1 695 864 A1**
(43) Date of publication of application: **30.08.2006**
(21) Application number: 06100826.4
(22) Date of filing: 25.01.2006
(51) Int. Cl.: B60N 2/28

(54) **Child seat structure for automobiles**

(30) Priority: 23.02.2005 ES 200500405
(71) Applicant: PLAY, S.A., 08184 Palau de Plegamans (ES)
(72) Inventor: Jané Stopp, Joaquim PLAY, S.A., 08184 Palau de Plegamans (ES)
(74) Representative: Ponti Sales, Adelaida

(57) **Abstract**

The child seat structure (1) for automobiles, comprising a pair of hook (3) to hold the seat to the retention system of the automobile, characterised in that the structure also comprises holding means (6) in the seat of the automobile by the seat belt (5) of the automobile and tighten means (7) of said seat belt.

Said structure (1) comprises a central profile (2) divided in three sectors: a substantially vertical sector (2a), an inclined intermediate sector (2b) and a substantially horizontal sector (2c).

The child seat can be used either with the hook system or with the seat belt of the automobile itself.

## Description

The present invention refers to a child seat structure for automobiles.

### BACKGROUND OF THE INVENTION

As it is already know, the children must be seated in an approved security seat when travel in an automobile.

There are two systems to hold the child seat to the seat of the automobile: a first system called Isofix consisting in a pair of hooks which are engaged to a bar integral with the frame of the automobile and placed in the lower part of the backrest; and a second system which is done by the seat belt of the automobile.

The advantages of the Isofix system are that it is very comfortable to fix and release the child seat, but it has the drawback that no all the automobiles have this system.

Another drawback which represents this double holding system, particularly for the manufacturers and the sellers of these child seats, is that it is necessary to manufacture a double version of the seat, one with each holding system.

Particularly, the holding system with the seat belt of the automobile presents the advantage that it is compatible with any automobile, but it presents the drawback that its placement is uncomfortable and is time consuming. This is mainly because the little space available normally to pass the seat belt between the structure and the carcass of the child seat.

### DESCRIPTION OF THE INVENTION

With the seat structure of the invention the cited drawbacks are solved, presenting other advantages that will be described.

The child seat structure for automobiles of the present invention comprises a pair of hook to hold the seat to the retention system of the automobile, and it is characterised in that the structure also comprises holding means in the seat of the automobile by the seat belt of the automobile and tighten means of said seat belt.

Thanks to this feature, the child seat can be used either with the Isofix system or with the seat belt of the automobile itself.

According to a preferred embodiment, said structure comprises a central profile divided in three sectors: a substantially vertical sector, an inclined intermediate sector and a substantially horizontal sector.

This particular shape of the structure permits a greater comfort to place the seat belt to fix the child seat in position in the seat of the automobile.

Preferably, said tighten means comprises a rotating plate above which passes said seat belt.

Said rotating place is preferably hinged in said inclined intermediate sector of said central profile.

Advantageously, the seat structure comprises means to regulate the position of said hooks with respect to the rest of the structure.

According to a preferred embodiment, said regulating means comprises a lever, integral with a bar which joins said hooks, which can be fixed in a plurality of positions of a rack.

Preferably, said holding means of the seat belt of the automobile comprises a grip placed in the upper part of said central profile.

### BRIEF DESCRIPTION OF THE DRAWINGS

For a better understanding of what has been exposed, some drawings are attached in which, diagrammatically and only as a non-limitative example, a practical case of embodiment is shown.

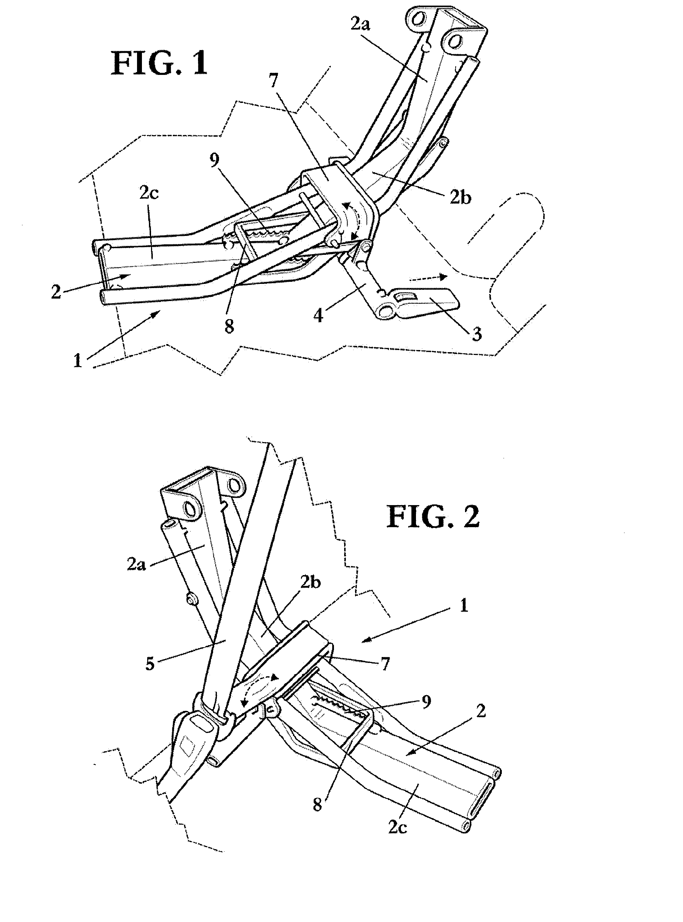

Fig. 1 is a perspective view of the seat structure of the present invention;
Fig. 2 is a perspective view of the seat structure of the present invention with the seat belt of the automobile placed in position; and
Fig. 3 is a perspective view of the structure of the present invention with the carcass of the child seat.

### DESCRIPTION OF A PREFERRED EMBODIMENT

As it can be seen in the drawings, the seat structure of the present invention, identified generally by the numerical reference 1, comprises a central profile 2 divided into three sectors: a substantially vertical sector 2a, an inclined intermediate sector 2b and a substantially horizontal sector 2c.

The seat structure 1 of the present invention also comprises a pair of hook 3 joined by a bar 4.

To place the seat belt 5 of the automobile, the structure comprises at its upper part a holding grip 6 and a rotatable plate 7 hinged in the intermediate sector 2b of said central profile 2.

The seat belt 5 passes above said plate 7, whose movement permits to tighten the seat belt 5, avoiding the displacement of the child seat.

The seat structure 1 of the present invention also comprises a lever 8 integral with the bar 4 which joins said hooks 3, so that said lever 8 can be placed in a plurality of positions along a rack 9 to regulate the position of said hooks 3 with respect to the rest of the structure 1.

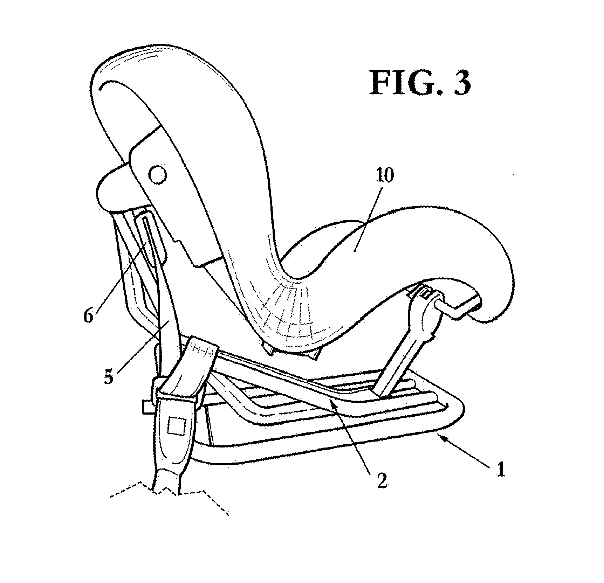

In fig. 3 it is shown the carcass of the seat 10, in which it can be seen the existing gap between said carcass 10 and the structure 1 of the present invention. Said gap can the obtained thanks to the configuration of the central profile 2 which forms the structure, permitting easily to pass the seat belt 5 between the carcass 10 and the structure 1.

The holding of the seat in position by the Isofix system, i.e., by the hooks 4, it is done normally, simply regulating the position with respect to the hooks 3 according to the thickness of the upholstery of the seat of the automobile.

To hold the seat in position by the seat belt 5, the seat belt 5 must pass between the carcass 10 of the seat and the structure 1, holding the seat belt 5 with the grip 6 and with the usual retaining means of the automobile. Finally, it is necessary to tighten the seat belt 5, which is done by the plate 7, that must be rotated until the seat belt 5 is tight enough to prevent the movement of the child seat with respect to the seat of the automobile.

Even though reference is made to a particular embodiment of the invention, it is apparent for a person skilled in the art that the seat structure described is susceptible of numerous variations and modifications, and that all the mentioned details can be substituted by other details technically equivalent, without departing from the scope of the appended claims.

## Claims

1. Child seat structure (1) for automobiles, comprising a pair of hook (3) to hold the seat to the retention system of the automobile, **characterised in that** the structure also comprises holding means (6) in the seat of the automobile by the seat belt (5) of the automobile and tighten means (7) of said seat belt.

2. Seat structure according to claim 1, **characterised in that** said structure (1) comprises a central profile (2) divided in three sectors: a substantially vertical sector (2a), an inclined intermediate sector (2b) and a substantially horizontal sector (2c).

3. Seat structure according to claim 1, **characterised in that** said tighten means comprises a rotating plate (7) above which passes said seat belt (5).

4. Seat structure according to claims 2 and 3, **characterised in that** said rotating place (7) is hinged in said inclined intermediate sector (2b) of said central profile (2).

5. Seat structure according to claim 1, **characterised in that** it comprises means (8, 9) to regulate the position of said hooks (3) with respect to the rest of the structure (1).

6. Seat structure according to claim 5, **characterised in that** said regulating means comprises a lever (8), integral with a bar (4) which joins said hooks (3), which can be fixed in a plurality of positions of a rack (9).

7. Seat structure according to claim 2, **characterised in that** said holding means of the seat belt (5) of the automobile comprises a grip (6) placed in the upper part of said central profile (2).
